# EUROPÄISCHE PATENTSCHRIFT

(11) **EP 0 909 792 B1**
(45) Veröffentlichungstag und Bekanntmachung des Hinweises auf die Patenterteilung: **23.02.2005**
(21) Anmeldenummer: 98119497.0
(22) Anmeldetag: 15.10.1998
(51) Int. Cl.: C08L 75/04, C08G 81/02

(54) **Lagerstabile Polyurethansynthesezusammensetzung**
Storage-stable composition for the synthesis of polyurethanes
Composition stable au stockage pour la synthèse de polyuréthane

(30) Priorität: 15.10.1997 DE 19745613
(43) Veröffentlichungstag der Anmeldung: 21.04.1999
(73) Patentinhaber: BASF AKTIENGESELLSCHAFT, 67056 Ludwigshafen (DE)
(72) Erfinder: Baumann, Edwin, 67105 Schifferstadt (DE); Häberle, Karl, Dr., 67346 Speyer (DE); Horn, Peter, Dr., 69118 Heidelberg (DE); Treuling, Ulrich, Dr., 64625 Bensheim (DE); Schwäbisch, Hans, 76764 Rheinzabern (DE)
(74) Vertreter: Isenbruck, Günter

(56) Entgegenhaltungen:
- EP-A- 0 537 028
- US-A- 4 002 703
- US-A- 5 364 909

## Beschreibung

Die Erfindung betrifft eine Polyurethansynthesezusammensetzung sowie ein Verfahren zu ihrer Herstellung als auch ein nach diesem Verfahren bzw. aus der Polyurethansynthesezusammensetzung erhaltenes Polyurethan und dessen Verwendung in Formmassen, Lacken, Beschichtungen, Folien, Fasern und Schäumen sowie Formmassen, Lacke, Beschichtungen, Folien, Fasern und Schäume, die diese Polyurethansynthesezusammensetzungen bzw. Polyurethane beinhalten.

Polyurethane werden in großem Umfang industriell eingesetzt, beispielsweise dienen sie als Isolierschäume bei der Wärme- und Schalldämmung. Ihre Einsatzmöglichkeiten sind sehr vielseitig. Von daher ist es notwendig, Polyurethane in unterschiedlicher Spezifikation herzustellen. Hierfür ist es insbesondere wichtig, daß die charakteristischen Parameter des Polyurethans genau eingestellt werden können. Zu diesen wichtigen Parametern gehören beispielsweise mechanische Eigenschaften, die Dichte und die Mindestentformzeit. Weiterhin ist es für eine vielseitige Einsetzbarkeit des Polyurethans notwendig, daß die Polyurethansynthesezusammensetzungen an Ort und Zeit ihres Einsatzes mit möglichst geringem Aufwand direkt verwendet werden können. In diesem Zusammenhang ist insbesondere das Vorliegen der Polyurethansynthesezusammensetzung als Einphasensystem über einen langen Zeitraum von Bedeutung.

Bisher wurde in der Praxis der Auflösung dieses Einphasensystems durch Phasenseparation entgegengewirkt, indem die Komponenten in den Vorrats- und Verteilungstanks mit aufwendigen Rührwerken oder durch ständiges Umpumpen in Bewegung gehalten wurden. Eine Separation der Komponenten ist jedoch selbst mit diesen technisch aufwendigen Maßnahmen nicht immer zu verhindern. Bei einer zu einem Mehrphasensystem führenden, beginnenden Phasenseparation stimmt die Stöchiometrie der Polyurethansynthesezusammensetzung in den Bereichen der einsetzenden Phasenseparation nicht mehr, was die Herstellung von fehlerhaften Polyurethanformteilen oder -schäumen, -fasern, -folien, -beschichtungen und -lacken zur Folge hat und sich auch nachteilhaft auf das Ausschäumen von Hohlräumen mit Polyurethan, vorzugsweise zur Wäremedämmung, auswirkt.

Aus der EP-A 0 368 217 sind kettenförmige Copolymerisate und ihre Verwendung als Dispergier- und/oder Emulgierhilfsmittel bei der Polyurethansynthese bekannt.

Daher ist es erfindungsgemäße Aufgabe, eine Polyurethansynthesezusammensetzung zur Verfügung zu stellen, die sich durch eine hohe Lagerstabilität auszeichnet und die für den direkten Einsatz notwendigen Eigenschaften, insbesondere das Vorliegen als Einphasensystem, möglichst über einen langen Zeitraum beibehält.

Somit ergibt sich insbesondere als erfindungsgemäße Aufgabe die Bereitstellung einer Polyurethansynthesezusammensetzung, die auch nach langen Zeiträumen, beispielsweise mehreren Monaten, als Einphasensystem, d.h. nicht separiert, vorliegt.

Ferner ist es eine erfindungsgemäße Aufgabe, daß zusätzlich zu dieser Lagerstabilität die aus dieser Polyurethansynthesezusammensetzung gewonnenen Polyurethane in ihren Materialeigenschaften zumindest unverändert gut bleiben oder sich diese Eigenschaften im Vergleich zu den herkömmlichen Polyurethanen, die nicht aus der erfindungsgemäßen Polyurethansynthesezusammensetzung gewonnen werden, verbessern.

Diese Aufgabe wird gelöst durch eine erfindungsgemäße Polyurethansynthesezusammensetzung, enthaltend mindestens ein Polymer als Emulgator, nachfolgend Copolymer (T) genannt, das mindestens aus folgenden Bestandteilen besteht: Einem Copolymerrückgrat (TR), gebildet aus mindestens einer ethylenisch ungesättigten C₄- bis C₁₂-Dicarbonsäure, deren Anhydrid oder deren Mischungen (TR1), mindestens einem C₂- bis C₄₀-Olefin (TR2), einem von dem Copolymerrückgrat ausgehenden Polyalkylenoxid (TP), gebildet aus mindestens einem C₂- bis C₂₀-Oxiran (TP1) sowie als weitere Komponente mindestens zwei Verbindungen mit mindestens zwei reaktiven Wasserstoffatomen (a), von denen mindestens eine Verbindung in einer anderen unlöslich ist, wobei die erste Verbindung ein Propylen- und Ethylenoxid aufweisendes Polyetherpolyol und die zweite Verbindung ein C₂-C₂₀-Alkylendiol ist, sowie durch ein daraus hergestelltes Polyurethan.

Unlöslichkeit liegt erfindungsgemäß dann vor, wenn eine 1:1-Mischung zweier Bestandteile im Zeitraum von einem Monat nach Herstellung der Mischung einer Phasenseparation unterliegt, wenn die Mischung nicht bewegt wird.

Neben dem Copolymer kann die erfindungsgemäße Polyurethansynthesezusammensetzung vorzugsweise außer einem organischen Isocyanat alle dem Fachmann aus der Literatur bekannten weiteren Bestandteile enthalten, die für die Synthese von Polyurethanen eingesetzt werden.

TR1 sind ethylenisch ungesättigte, vorzugsweise monoethylenisch ungesättigte, Dicarbonsäuren und deren Anhydride mit 4 bis 12, bevorzugt 4 bis 8 und besonders bevorzugt 4 bis 6 Kohlenstoffatomen. Besonders bevorzugt sind Maleinsäure, Itaconsäure, Citraconsäure, Mesaconsäure, Fumarsäure, Maleinsäureanhydrid, Itaconsäureanhydrid, Citraconsäureanhydrid, Methylenmalonsäureanhydrid, 1,2,3,6-Tetrahydrophthalsäureanhydrid, 3,6-Epoxy-1,2,3,6-tetrahydrophthalsäureanhydrid, 5-Norbonen-2,3-dicarbonsäureanhydrid, Bicyclo[2.2.2]-5-octen-2,3-dicarbonsäureanhydrid, 3-Methyl-1,2,6-tetrahydrophthalsäureanhydrid oder 2-Ethyl-1,3,6-tetrahydrophthalsäureanhydrid und deren Mischungen. Aus dieser Aufzählung ist Maleinsäureanhydrid bevorzugt.

Als C₂- bis C₄₀-Olefine kommen alle dem Fachmann geläufigen und aus der Literatur bekannten Olefine in Betracht. Bei der Polymerisation zur Herstellung des Copolymerrückgrats des Copolymers ist das Herstellungsverfahren den physikalischen Eigenschaften der Olefine anzupassen.

Erfindungsgemäß bevorzugte Olefine sind vorzugsweise á-Olefine, insbesondere Monoolefine mit mindestens 4, bevorzugt mindestens 6 und besonders bevorzugt mit mindestens 8 Kohlenstoffatomen. Zu der Gruppe der erfindungsgemäß bevorzugten Monoolefine gehören unter anderem n-Octen-1, 2,4,4-Trimethylpenten-1, 2,4,4-Trimethylpenten-2, die auch als technisch als ein Isomerengemisch aus ca. 80 Gew.-% 2,4,4-Trimethylpenten-1 und ca. 20 Gew.-% 2,4,4-Trimethylpenten-2 vorliegen können, Diisobuten, 4,4-Dimethylhexen, Decen-1, Dodecen-1, Tetradecen-1, Hexadecen-1, Octadecen-1, C₂₀-Olefin-1, C₂₂-Olefin-1, C₂₄-Olefin-1, C₂₀- bis C₂₄-Olefin-1, C₂₄- bis C₂₈-Olefin-1, C₂₈- bis C₄₀-Olefin-1, C₃₀-Olefin-1, C₃₅-Olefin-1 und C₄₀-Olefin-1, insbesondere gleichfalls als technische Gemische. Weiterhin kommen Mischungen von zwei oder mehreren Olefinen in Betracht. Außer den offenkettigen Olefinen kommen auch zyklische Olefine in Betracht, beispielsweise Cyclopenten, Cyclohexen, Cyclohepten, Cycloocten, bevorzugt Cycloocten. Die Olefine, insbesondere wenn sie aus großtechnischen Produktionen stammen, können von der Herstellung her geringe Mengen an inerten organischen Kohlenwasserstoffen - in der Regel bis zu etwa 5 Gew.-% - enthalten. Die Olefine werden üblicherweise in der im Handel erhältlichen Qualität eingesetzt. Sie müssen keinerlei besonderer Reinigung unterworfen werden. Unter den Olefinen sind C₈- bis C₂₅- bevorzugt und C₁₂- bis ₁₄-α-Olefine besonders bevorzugt.

Das in der erfindungsgemäßen Polyurethansynthesezusammensetzung eingesetzte Copolymer weist zudem ein von dem Polymerrückgrat ausgehendes Polyalkylenoxid auf. Erfindungsgemäß ist es bevorzugt, daß das Polyalkylenoxid von mindestens einem Anhydrid des Copolymerrückgrats ausgeht. Unter dem Begriff "ausgehen" wird erfindungsgemäß verstanden, daß das Polyalkylenoxid sowohl unmittelbar als auch mittelbar an das Copolymerrückgrat gebunden ist.

Sofern das Polyalkylenoxid unmittelbar an das Copolymerrückgrat gebunden ist, bedeutet das, daß dieses direkt - insbesondere mittels Reaktion mit mindestens einer Anhydrid- oder einer Carboxylgruppe oder deren Mischung erfolgt - über eine Esterfunktion mit dem Copolymerrückgrat verbunden ist. Bei der mittelbaren Bindung des Polyalkylenoxids an dem Copolymerrückgrat, insbesondere an mindestens einem Anhydrid oder einer Carboxylgruppe oder deren Mischung des Copolymerrückgrates, ist das Polyalkylenoxid indirekt, d.h. über einen Spacer, an das Copolymerrückgrat gebunden. Bei einem solchen Spacer handelt es sich vorzugsweise um einen C₁- bis C₂₀-, bevorzugt C₂- bis C₁₀- und besonders bevorzugt C₂- bis C₆-Kohlenwasserstoff mit mindestens zwei funktionellen Gruppen, die sowohl zur Bindung an dem Copolymerrückgrat, insbesondere an mindestens einem Anhydrid oder einer Carboxylgruppe oder deren Kombination des Copolymerrückgrates, als auch zur Bindung an einem reaktiven Ende des Polyalkylenoxids befähigt - sind.

Erfindungsgemäß ist es jedoch bevorzugt, daß das Polyalkylenoxid unmittelbar an dem Copolymerrückgrat und insbesondere an mindestens einem Anhydrid oder einer Carboxylgruppe oder deren Kombination des Copolymerrückgrats gebunden ist, wobei eine durch eine Kondensations- oder Additionsreaktion gebildete Bindung bevorzugt ist.

Die durch Kondensationsreaktion oder Additionsreaktion gebildete Bindung kann eine Esterbindung sein, die aus einer C=O-Funktion des Anhydrids oder einer Carboxylgruppe oder deren Kombination und einer OH-Gruppe des Polyalkylenoxids gebildet ist. Weiterhin kann die Polykondensationsreaktion auch über eine Imid-Bindung aus zwei C=O-Funktionen der Anhydride des Polymerrückgrates und einer Aminfunktion des Polyalkylenoxids erfolgen.

Erfindungsgemäß ist die Esterbindung als Verknüpfung zwischen Polymerrückgrat und Polyalkylenoxid bevorzugt.

In der Kondensationsreaktion zur Verknüpfung des Polymerrückgrats und des Polyalkylenoxids können weiterhin dem Fachmann geläufige Hilfsmittel eingesetzt werden, die ein durch Vernetzen bedingtes Gelieren beim Umsetzen des Polyalkylenoxids mit dem Polymerrückgrat verhindern. Erfindungsgemäß bevorzugte, das Gelieren verhindernde Hilfsmittel sind Verbindungen mit einer gegenüber Carbonsäure reaktiven Gruppe, vorzugsweise Alkohole oder Amine, insbesondere Amine, vorzugsweise Amine mit einem Siedepunkt, der höher als der des Wassers liegt, wobei Methoxyethoxypropylamin besonders bevorzugt ist.

Das von dem Copolymerrückgrat ausgehende Polyalkylenoxid ist mindestens aus einem C₂- bis C₂₀-, bevorzugt C₂- bis C₁₀- und besonders bevorzugt C₂- bis C₅-Oxiran gebildet. Als C₂- bis C₅-Oxirane sind Ethylenoxid, Propylenoxid, Butylenoxid, Pentylenoxid sowie mindestens zwei in dieser Auflistung enthaltene, als Alkylenoxid bevorzugt und Ethylen- oder Propylenoxid sowie deren Mischung. Erfindungsgemäß ist Ethylenoxid bevorzugt. Wenn Ethylen- und Propylenoxid zusammen eingesetzt werden, ist es bevorzugt mindestens 50 mol-% und besonders bevorzugt mindestens 80 mol-% Ethylenoxid einzusetzen.

TR und TP bilden vorzugsweise jeweils unabhängig voneinander mindestens 10 Gew.-% des erfindungsgemäßen Copolymers. Die erfindungsgemäße Polyurethansynthesezusammensetzung weist wiederum das Copolymer in einer Menge von 0,01 bis 10, vorzugsweise 0,05 bis 7 und besonders bevorzugt 0,1 bis 5 Gew.-% auf.

Das Copolymer der erfindungsgemäßen Polyurethansynthesezusammensetzung besteht mindestens aus einem Polymerrückgrat und mindestens einer, bevorzugt mindestens zwei und besonders bevorzugt mindestens drei von dem Copolymerrückgrat ausgehenden Polyalkylenoxidketten. Die Oxidkette oder die Polyalkylenoxidkette, die von dem Copolymerrückgrat ausgehen, können sowohl von den Enden, als auch von zwischen beiden Enden liegenden Abschnitten des Copolymerrückgrats ausgehen.

Für den Fall, daß mindestens drei Polyalkylenoxide von dem Copolymerrückgrat ausgehen, ist es erfindungsgemäß bevorzugt, daß ein kammähnliches Gebilde entsteht. Bei diesem kammähnlichen Gebilde gehen die Polyalkylenoxidketten wie Zinken von dem Copolymerrückgrat aus. Somit ist es erfindungsgemäß besonders bevorzugt, wenn für die Polyurethansynthesezusammensetzung ein Copolymer in Form eines Kammpolymers eingesetzt wird.

In einer Ausführungsform der erfindungsgemäßen Polyurethansynthesezusammensetzung wird ein Copolymer eingesetzt, wobei das Copolymerrückgrat jeweils mindestens 10 Gew.-% aus TR1 und TR2 enthält und ein Molekulargewicht M_{w} von 300 bis 20.000, bevorzugt 500 bis 15.000 g/mol besitzt.

In einer weiteren Ausführungsform der Polyurethansynthesezusammensetzung weist diese ein Copolymer mit einem Polyalkylenoxid auf, das aus mindestens 10, bevorzugt mindestens 30 und besonders bevorzugt mindestens 50 Gew.-% TP1, bezogen auf das Polymer (T), besteht und in dem TP1 ein Molekulargewicht Mₙ von 300 bis 50.000, bevorzugt 300 bis 20.000 und besonders bevorzugt 500 bis 15.000 g/mol besitzt.

Die hier angegebenen Molekulargewichte von TR wurden durch Gelpermeationschromatographie des in Tetrahydofuran gelösten Polymers mit einem Polystyrolstandard und die von TP über die Bestimmung der Hydroxylzahl bestimmt.

Ferner ist es erfindungsgemäß bevorzugt, wenn im statistichen Mittel von 10 bis 100, bevorzugt 20 bis 80 und besonders bevorzugt 25 bis 70 mol-% der Anhydridgruppen oder Carboxylgruppen des Copolymerrückgrats mit Polyalkylenoxid TP umgesetzt sind.

Weiterhin ist es erfindungsgemäß bevorzugt, daß bei einer nicht vollständigen Umsetzung mit Polyalkylenoxid weniger als 100 mol-% Polyalkylenoxide von den Anhydridgruppen des Copolymerrückgrats ausgehen. Von den Anhydridgruppen, von denen keine Polyalkylenoxide ausgehen, gehen wiederum vorzugsweise Alkoxyreste von C₁- bis C₃₀-, bevorzugt C₁- bis C₂₀- und besonders bevorzugt von C₁- bis C₈-Alkanol oder Aminoreste von C₁- bis C₃₀-, bevorzugt C₁- bis C₂₀- und besonders bevorzugt C₁- bis C₁₀-Aminen, vorzugsweise Alkoxyamine, oder deren Mischungen aus.

Bei der nicht vollständigen Umsetzung des Copolymerrückgrats mit Polyalkylenoxid oder Polyalkylenoxiden ist es besonders bevorzugt, dieses mit den zuvor beschriebenen Alkanolen und Aminen, vorzugsweise Alkoxyaminen, umzusetzen. Dieses verhindert eine Gelbildung bei der Herstellung des Emulgators.

Erfindungsgemäß wird der hier beschriebene Emulgator in der Polyurethansynthesezusammensetzung verwendet. Weiterhin ist es erfindungsgemäß bevorzugt, diesen Emulgator bei der Polyurethansynthese zu verwenden.

Es ist erfindungsgemäß bevorzugt, daß das Copolymer als Emulgator in der Polyurethansynthesezusammensetzung in einer Menge von 0,01 bis 30, bevorzugt 0,1 bis 20 und besonders bevorzugt 1 bis 10 Gew.-%, bezogen auf die Polyurethansynthesezusammensetzung, vorliegt.

Die erfindungsgemäße Polyurethansynthesezusammensetzungenthält neben dem Terpolymer als Emulgator als Komponente (a) zum einen mindestens ein Propylen- und Ethylenoxid aufweisendes Polyetherpolyol als erste Verbindung. In diesem sind vorzugsweise 10 bis 50, bevorzugt 15 bis 30 und besonders bevorzugt 20 bis 25 Gew.-% Ethylenoxid eingebaut. Das obige Polyetherpolyol weist bevorzugt eine OH-Zahl im Bereich von 10 bis 50, bevorzugt 15 bis 40 und besonders bevorzugt 20 bis 30 auf.

Als zweite Verbindung weist die Komponente (a) mindestens ein C₂- bis C₂₀-, bevorzugt C₂- bis C₁₀- und besonders bevorzugt C₂- bis C₅-Alkylen-Diol auf. Bevorzugt sind Alkylenglykole, insbesondere Ethylenglycol, Propylenglycol, Butylenglycol und Pentylenglycol sowie Butandiol-1,4 und Pentandiol-1,5, wobei Ethylenglycol bevorzugt ist. Weiterhin ist es erfindungsgemäß bevorzugt, daß das Polyetherpolyol in einer Menge von 65 bis 85 und besonders bevorzugt 74 bis 80 Gew.-% und das Alkylenglycol in einer Menge von 5 bis 35 und bevorzugt 15 bis 30 und besonders bevorzugt 20 bis 26 Gew.-%, bezogen auf beide, vorliegt.

In einer erfindungsgemäß bevorzugten Ausführungsform der Polyurethansynthesezusammensetzung sind neben mindestens einem Copolymer organische Verbindungen mit mindestens zwei reaktiven Wasserstoffatomen (a) und Kettenverlängerungs- und Vernetzungsmittel (b) vorhanden.

In einer erfindungsgemäß bevorzugten Ausführungsform der Polyurethansynthesezusammensetzung umfaßt diese zudem mindestens die Komponenten Kettenverlängerungs- und/oder Vernetzungsmittel (b) oder Katalysator (c) oder Treibmittel (d) oder Flammschutzmittel (e) oder Verstärkungsmittel (f) oder Hilfsmittel (g) oder eine Mischung aus mindestens zwei davon.

In einer weiteren erfindungsgemäßen Polyurethansynthesezusammensetzung sind neben mindestens einem Copolymer organische Verbindungen mit mindestens zwei reaktiven Wasserstoffatomen (a) und Katalysatoren (c) vorhanden.

Ferner besteht eine erfindungsgemäße Ausführungsform der Polyurethansynthesezusammensetzung neben mindestens einem Copolymer aus mindestens einer organischen Verbindung mit mindestens zwei reaktiven Wasserstoffen (a) und von (a) veschiedene Kettenverlängerungs- und Vernetzungsmittel (b) sowie Katalysatoren (c).

Zudem besteht eine erfindungsgemäße Ausführungsform der Polyurethansynthesezusammensetzung neben dem Copolymer mindestens aus einer organischen Verbindung mit mindestens zwei reaktiven Wasserstoffatomen (a), Katalysatoren (c) und Treibmittel (d).

Eine besonders bevorzugte Ausführungsform der erfindungsgemäßen Polyurethansynthesezusammensetzung beinhaltet mindestens 60, bevorzugt mindestens 70 Gew.-%, eines Polyetherpolyols aus Propylen- und Ethylenoxid, wobei das Polyetherpolyol 5 bis 50, bevorzugt 10 bis 30 und besonders bevorzugt 15 bis 25 Gew.-%, bezogen auf das Polyetherpolyol, Ethylenoxid aufweist. Das Polyetherpolyol weist eine OH-Zahl im Bereich von 10 bis 50, bevorzugt 15 bis 40 und besonders bevorzugt 20 bis 30 sowie maximal 30, weiterhin bevorzugt maximal 25 Gew.-% eines Alkylenglycols, vorzugsweise Ethylenglycol und maximal 10, bevorzugt maximal 5 Gew.-% einer vorzugsweise wässrigen mindestens 1 Gew.-% des erfindungsgemäßen Emulgators aufweisenden Emulgatorlösung auf.

Der vorzugsweise in dieser Ausführungsform eingesetzte Emulgator ist erhältlich durch Umsetzung eines Polyethylenoxids mit einem Molekulargewicht (Mₙ) von 500 bis 15.000 g/mol mit einem Copolymer aus Maleinsäureanhydrid, C₁₂- und C₁₂- bis C₁₄-α-Olefincopolymer, vorzugsweise mit einem Molekulargewicht (M_{w}) im Bereich von 300 bis 20.000 und besonders bevorzugt 500 bis 15.000 g/mol, wobei das Polyethylenoxid und das Copolymer in einem auf die funktionellen Gruppen bezogenen molaren Verhältnis von 0,25 bis 1 eingesetzt werden. Die Umsetzung erfolgt vorzugsweise in einem Temperaturbereich von 50 bis 200°C, bevorzugt von 70 bis 180°C und besonders bevorzugt von 90 bis 160°C. Ferner ist es erfindungsgemäß bevorzugt, daß als Hilfsmittel zur Verhinderung der Gelbildung Verbindungen mit einer gegenüber Carbonsäuren reaktiven Gruppe, vorzugsweise Alkohole oder Amine, mit einem Siedepunkt, der höher als der des Wassers liegt, vorzugsweise Methoxyethoxypropylamin, an der Umsetzung beteiligt sind.

Vorzugsweise wird der Emulgator im Wasser gelöst. Die aus dieser erfindungsgemäßen Ausführungsform erhaltene wässrige Emulgatorlösung weist zwischen 20 bis 80, bevorzugt 30 bis 70 und besonders bevorzugt 40 bis 60 Gew.-% des in diesem Absatz beschriebenen Emulgators auf.

Die erfindungsgemäße Polyurethansynthesezusammensetzung liegt vorzugsweise als Einphasensystem vor. Unter dem Begriff "Einphasensystem" wird erfindungsgemäß verstanden, daß die miteinander schlecht oder unlöslichen Bestandteile der Polyurethansynthesezusammensetzung eine homogene Dispersion bilden. Erfindungsgemäß ist es bevorzugt, daß die Polyurethansynthesezusammensetzung mindestens 36 Stunden, bevorzugt mindestens einen Monat und besonders bevorzugt mindestens drei Monate als Einphasensystem vorliegt und nicht in eine zwei- oder mehrphasige Mischung separiert.

Das erfindungsgemäße Einphasensystem liegt dann nicht mehr vor, wenn sich durch Entmischung das Einphasensystem in mindestens zwei Phasen aufgetrennt hat, wobei eine dieser Phasen maximal 2, bevorzugt maximal 5 und besonders bevorzugt maximal 10 Vol.-%, bezogen auf das Gesamtvolumen des gebildeten Mehrphasensystems, bildet.

Das einphasige Vorliegen der Polyurethansynthesezusammensetzung über einen längeren Zeitraum von mehreren Tagen bis mehreren Monaten ist insbesondere in Bezug auf die direkte Einsetzbarkeit der Polyurethansynthesezusammensetzung zur Herstellung von Polyurethanen und insbesondere von Formteilen und Schäumen vorteilhaft. Weiterhin ist es bei der erfindungsgemäßen Polyurethansynthesezusammensetzung nicht mehr notwendig, die Komponenten in den Vorrats- und Verarbeitungstanks mit aufwendigen Rührwerken oder durch ständiges Umpumpen in Bewegung zu halten und damit die Phasenseparation zu vermeiden.

Die erfindungsgemäßen Polyurethansynthesezusammensetzungen werden hergestellt, indem die Komponenten, vorzugsweise organische Verbindungen mit mindestens zwei reaktiven Wasserstoffen (a) in Gegenwart mindestens eines Copolymers miteinander in Kontakt gebracht werden.

Erfindungsgemäß wird unter dem Begriff "Inkontaktbringen" ein Vorgehen verstanden, in dem mindestens die Komponente (a) mit dem Copolymer unter Bildung eines Einphasensystems miteinander vereinigt werden. Dieses geschieht vorzugsweise durch Mischen mit einer schnellaufenden Mischeinrichtung. Erfindungsgemäß kommen als Mischeinrichtungen auch statische Mischer in Betracht, wobei schnellaufende Mischeinrichtungen bevorzugt sind. Zu diesen gehören beispielsweise Mischer der Fa. Vollrath, insbesondere des Typs R15-0000-037-4. Der Drehzahlbereich der schnellaufenden Mischeinrichtungen beträgt 100 bis 3.000, bevorzugt 200 bis 2.000 U/min.

In einer weiteren Ausführungsform des Verfahrens zur Herstellung der erfindungsgemäßen Polyurethansynthesezusammensetzung können zusätzlich mindestens eine der Komponenten (c) bis (g) oder deren Mischungen eingesetzt werden.

Die Herstellung der erfindungsgemäßen Polyurethansynthesezusammensetzung erfolgt vorzugsweise bei Normaldruck und Raumtemperatur.

Zur Herstellung von Polyurethanen können die Polyurethansynthesezusammensetzungen gemäß der einzelnen erfindungsgemäß bevorzugten Ausführungsformen zusammen mit mindestens einem organischen Polyisocyanat (h) umgesetzt werden.

Aus den erfindungsgemäßen Polyurethansynthesezusammensetzungen können nach dem im Kunststoffhandbuch, Band 7, "Polyurethane" von Gerhard W. Becker und Dietrich Braun, Hanser Verlag, 3. Auflage, 1993 mit weiteren Nachweisen angegebenen Verfahren, Polyurethane synthetisiert werden, die mindestens aus den erfindungsgemäßen Polyurethansynthesezusammensetzungen bestehen.

Diese Polyurethane und die erfindungsgemäßen Polyurethansynthesezusammensetzungen oder deren Mischungen können für Formkörper, Fasern, Folien, Beschichtungen und Lacke sowie Schäume verwendet werden. Besonders bevorzugt ist die Verwendung für Schäume.

Weiterhin können Formkörper, Fasern, Folien, Beschichtungen, Lacke und Schäume, vorzugsweise Schäume, die erfindungsgemäßen Polyurethansynthesezusammensetzungen oder daraus gewonnenen Polyurethane oder deren Mischungen beinhalten.

Eine erfindungsgemäß besonders bevorzugte Ausführungsform des Polyurethans ist erhältlich aus einer Polyurethansynthesezusammensetzung beinhaltend mindestens 60, bevorzugt mindestens 70 Gew.-% eines vorzugsweise TMP-gestarteten Polyetherpolyols aus Propylen- und Ethylenoxid, wobei das Polyetherpolyol 5 bis 50, bevorzugt 10 bis 30 und besonders bevorzugt 15 bis 25 Gew.-%, bezogen auf das Polyetherpolyol, Ethylenoxid aufweist. Das Polyetherpolyol weist eine OH-Zahl im Bereich von 10 bis 50, bevorzugt 15 bis 40 und besonders bevorzugt 20 bis 30, sowie maximal 30, bevorzugt maximal 25 Gew.-% eines Alkylenglycols, vorzugsweise Ethylenglycol, auf. Die Polyurethansynthesezusammensetzung beinhaltet maximal 10, bevorzugt maximal 5 Gew.-% einer vorzugsweise wässrigen, mindestens 1 Gew.-% der das erfindungsgemäß verwendete Copolymer als Emulgator aufweisenden Emulgatorlösung.

Der vorzugsweise in dieser Ausführungsform eingesetzte Emulgator ist erhältlich durch Umsetzung eines Polyethylenoxids mit einem Molekulargewicht (M_{w}) von 5.000 bis 15.000 g/mol mit einem Copolymer aus Maleinsäureanhydrid und C₁₂- und C₁₂- bis C₁₄-α-Olefinen, vorzugsweise mit einem Molekulargewicht (Mₙ) im Bereich von 300 bis 20.000, wobei das Polyethylenoxid und das Copolymer in einem molaren Verhältnis von 0,25 bis 1, bezogen auf die funktionellen Gruppen, eingesetzt werden.

Weiterhin weist diese Polyurethansynthesezusammensetzung eine oder mehrere, Isocyanat-Komponenten auf. Eine Isocyanat-Komponente wird aus 4,4-Diphenylmethandiisocyanat (MDI) gebildet, das mit einem Produkt aus einem Alkylenglycol, vorzugsweise Diethylenglycol und Propylenoxid mit einer OH-Zahl im Bereich von 50 bis 500, bevorzugt 200 bis 300 und besonders bevorzugt 220 bis 280 auf einen Isocyanat-Wert von 5 bis 60, bevorzugt 15 bis 40 und besonders bevorzugt 20 bis 25 gebracht wurde. Eine andere Isocyanat-Komponente besteht vorzugsweise aus einer Mischung, deren überwiegender Teil MDI ist und deren weiterer Teil aus dem sich bei der Destillation von Roh-MDI bildenden polymeren MDI besteht. Diese Mischung ist durch die Umsetzung mit dem zuvor beschriebenen Produkt aus Alkylenglycol und Propylenoxid auf einen NCO-Gehalt im Bereich von 10 bis 60, bevorzugt 20 bis 40 und besonders bevorzugt 25 bis 35 gebracht worden.

Die Vermischung erfolgt in einem Temperaturbereich von 20 bis 100, bevorzugt 20 bis 70 und besonders bevorzugt 20 bis 50°C.

Eine Übersicht über die Herstellung von Formkörpern, vorzugsweise aus zelligen oder kompakten PU-Gießelastomeren, PU-Elastomeren, PU-Schaumstoffen, PUR-Schaumstoffen und anderen, ihre mechanischen Eigenschaften und ihre Verwendung wird unter anderem im Kunststoffhandbuch, Band 4, Polyurethane, 1. Auflage, 1966, herausgegeben von Dr. R. Viewig und Dr. Bechtlen, 2. Auflage, 1983, herausgegeben von Dr. G. Oertel, und 3. Auflage, 1993, herausgegeben von Dr. G.W. Becker und Dr. D. Braun (Carl-Hanser-Verlag, München, Wien) und "Integralschaumstoffe", herausgegeben von Dr. H. Pichota und Dr. H. Rohr (Carl-Hanser-Verlag, München, Wien, 1975) gegeben.

### Verbindungen mit mindestens zwei reaktiven Wasserstoffen (a)

Als organische Verbindungen mit mindestens zwei reaktiven Wasserstoffen (a) werden vorzugsweise die oben näher charakterisierten Verbindungen, gegebenenfalls im Gemisch mit weiteren mit einer Funktionalität von 2 bis 8, vorzugsweise 2 bis 4, und einem Molekulargewicht von 300 bis 10.000, vorzugsweise 1.000 bis 6.000, verwendet. Besonders bevorzugt sind beispielsweise Polyetherpolyamine und/oder vorzugsweise Polyole, ausgewählt aus der Gruppe der Polyetherpolyole, Polyesterpolyole, Polythioetherpolyole, Polyesteramide, hydroxygruppenhaltige Polyacetate und hydroxygruppenhaltige aliphatische Polycarbonate oder Mischungen aus mindestens zwei der genannten Polyole. Vorzugsweise Anwendung finden Polyesterpolyole und/oder Polyetherpolyole.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen vorzugsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der freien Dicarbonsäuren können auch die entsprechenden Dicarbonsäurederivate, beispielsweise Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure und insbesondere Adipinsäure. Beispiele für zwei- und mehrwertige Alkohole, insbesondere Diole, sind: Ethandiol, Diethylenglycol, 1,2- bzw. 1,3-Propandiol, Dipropylenglycol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglycol, 1,4-Butandiol, 1,5-Pentandiol und 1,6-Hexandiol. In dem erfindungsgemäßen Verfahren zur Herstellung der Polyurethane können weiterhin eingesetzt werden: Polyesterpolyole aus Lactonen, beispielsweise ε-Caprolacton oder Hydroxycarbonsäuren, beispielsweise ω-Hydroxycarbonsäuren.

Zur Herstellung der Polyesterpolyole können die organischen, beispielsweise aromatischen und vorzugsweise aliphatischen Polycarbonsäuren und/oder Derivate und mehrwertigen Alkohole katalysatorfrei oder vorzugsweise in Gegenwart von Veresterungskatalysatoren polykondensiert werden. Die Polykondensation wird vorzugsweise in einer Atmosphäre aus Inertgas, beispielsweise Stickstoff, Kohlenmonoxid, Helium, Argon und anderen, in der Schmelze bei Temperaturen von 150 bis 200°C, vorzugsweise 180 bis 220°C, gegebenenfalls unter vermindertem Druck, bis zu einer gewünschten Säurezahl durchgeführt. Die resultierende Säurezahl beträgt vorteilhafterweise < 10, vorzugsweise < 2. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von < 500 mbar, vorzugsweise 50 bis 150 mbar, polykondensiert. Als Veresterungskatalysatoren kommen beispielsweise Eisen-, Cadmium-, Cobalt-, Blei-, Zink-, Antimon-, Magnesium-, Titan- und Zinn-Katalysatoren in Form von Metallen, Metalloxiden oder Metallsalzen in Betracht.

Die Polykondensation kann jedoch auch in Gegenwart von Verdünnungs- und/oder Schleppmitteln, wie beispielsweise Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertige Alkohole vorteilhafterweise im Molverhältnis von 1:1 bis 1,8, vorzugsweise 1:1,05 bis 1,2, polykondensiert.

Die erhaltenen Polyesterpolyole besitzen vorzugsweise eine Funktionalität von 2 bis 4, insbesondere 2 bis 3, und ein Molekulargewicht von 480 bis 3.000, vorzugsweise 1.000 bis 3.000.

Als Polyole werden jedoch vorzugsweise Polyetherpolyole verwendet, die nach bekannten Verfahren, beispielsweise durch anionische Polymerisation mit Alkalihydroxiden, wie beispielsweise Natrium- oder Kaliumhydroxid oder Alkalialkoholaten, wie beispielsweise Natriummethylat, Natrium- oder Kaliumethylat oder Kaliumisopropylat, als Katalysatoren und unter Zusatz mindestens eines Startermoleküls, das 2 bis 8, vorzugsweise 2 bis 4, reaktive Wasserstoffatome gebunden enthält, hergestellt werden.

Ferner kann die Herstellung durch kationische Polymerisation mit Lewissäuren, wie Antimonpentachlorid, Borfluorid-etherat u.a. oder Bleicherde, als Katalysatoren aus einem oder mehreren Alkylenoxiden mit 2 bis 4 Kohlenstoffatomen tragenden Alkylresten durchgeführt werden.

Geeignete Alkylenoxide sind beispielsweise 1,3-Propylenoxid, 1,2- bzw. 2,3-Butylenoxid, Styroloxid, THF und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono- N,N- und N,N'-dialkylsubstituierte Diamine mit 1 bis 2 Kohlenstoffatomen im Alkylrest, wie gegebenenfalls mono- und dialkylsubstituiertes Ethylendiamin, Diethylentriamin, Triethylentetraamin, 1,3-Proyplendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4'-, 2,4'- und 2,2'-Diaminodiphenylmethan.

Als Startermoleküle kommen ferner vorzugsweise in Betracht: Alkanolamine, beispielsweise Ethanolamin, N-Methyl- und N-Ethylethanolamin, Dialkanolamine, wie beispielsweise Diethanolamin, N-Methyl- und N-Ethyldiethanolamin, und Trialkanolamine, wie beispielsweise Triethanolamin sowie Ammoniak. Vorzugsweise verwendet werden mehrwertige, insbesondere zwei- und/oder dreiwertige Alkohole, beispielsweise Ethandiol, Propandiol-1,2 und -2,3, Diethylenglycol, Dipropylenglycol, Butandiol-1,4, Hexandiol-1,6, Glycerin, Trimethylolpropan und Pentaerythrit oder Zucker, vorzugsweise Rübenzucker.

Die Polyetherpolyole, vorzugsweise Polyoxypropylen- und Polyoxypropylenpolyoxyethylenpolyole, besitzen eine Funktionalität von vorzugsweise 2 bis 8 und ein Molekulargewicht von 300 bis 10.000, vorzugsweise 1.000 bis 6.000 und insbesondere bevorzugt von 1.500 bis 5.000. Geeignete Polyoxytetramethylenglycole besitzen ein Molekulargewicht von bis zu ungefähr 3.500.

Weiterhin eignen sich als Polyetherpolyole insbesondere polymermodifizierte Polyetherpolyole, vorzugsweise Pfropfpolyetherpolyole, insbesondere solche auf Styrol- und/oder Acrylnitrilbasis. Diese lassen sich durch *In*-*Situ*-Polymerisation von Acrylnitril, Styrol oder vorzugsweise Mischungen aus Styrol und Acrylnitril, beispielsweise im Gewichtsverhältnis von 90 : 10 bis 10 : 90, vorzugsweise 70 : 30 bis 30 : 70, in zweckmäßiger Weise mit den vorgenannten Polyetherpolyolen analog den Angaben der deutschen Patentschriften 11 11 394, 12 22 669 (US 3,304,273, 3,383,351, 3,523,039), 1 152 536 (GB 1 040 452) und 1 152 537 (GB 9 876 618) herstellen. Ferner eignen sich Polyetherpolyoldispersionen, die als disperse Phasen, üblicherweise in einer Menge von 1 bis 50 Gew.-%, vorzugsweise 2 bis 25 Gew.-%, z.B. Polyharnstoffe, Polyhydrazide, tert.-Aminogruppen gebunden enthaltende Polyurethane und/oder Melamin enthalten. Solche Dispersionen werden beispielsweise in der EP-B-011 752 (US 4,304,708), US-4,374,209 und DE-A-32 31 497 beschrieben.

Die Polyetherpolyole können ebenso wie die Polyesterpolyole einzeln oder in Form von Mischungen verwendet werden. Ferner können sie mit den Pfropfpolyetherpolyolen oder Polyesterpolyolen sowie den hydroxygruppenhaltigen Polyesteramiden, Polyacetalen, Polycarbonaten und/oder Polyetherpolyaminen gemischt werden.

Als hydroxygruppenhaltige Polyacetale kommen beispielsweise die aus Glycolen, wie Diethylenglycol, Triethylenglycol, 4,4'-Dihydroxyethylendiphenyldimethylmethan, Hexandiol und Formaldehyd, herstellbaren Verbindungen in Frage. Auch durch Polymerisation zyklischer Acetale lassen sich geeignete Polyacetale herstellen.

Als Hydroxygruppen aufweisende Polycarbonate kommen insbesondere solche in Betracht, die beispielsweise durch Umsetzung von Diolen, wie Propandiol-1,3, Butandiol-1,4 und/oder Hexandiol-1,6, Diethylenglycol, Triethylenglycol oder Tetraethylenglycol mit Diarylcarbonaten, beispielsweise Diphenylcarbonat oder Phosgen, hergestellt werden können.

Zu den bevorzugten Polyesteramiden zählen beispielsweise die aus mehrwertigen, gesättigten und/oder ungesättigten Carbonsäuren, beispielsweise deren Anhydriden oder mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Bevorzugte erfindungsgemäß geeignete Polyetherpolyamine können aus den oben genannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US 3,267,050) oder die teilweise oder vollständige Aminierung von Polyoxyalkylenpolyolen mit Aminen oder Ammoniak in Gegenwart von Wasserstoff und Katalysatoren (DE 12 15 373).

Erfindungsgemäß besonders bevorzugt sind 2- bis 3-funktionelle Propylen- und Ethylenoxid aufweisende Polyetherole, in denen vorzugsweise 10 bis 50, bevorzugt 15 bis 30 und besonders bevorzugt 20 bis 25 Gew.-% Ethylenoxid eingebaut sind und die ferner eine OH-Zahl im Bereich von 10 bis 50, bevorzugt 15 bis 40 und besonders bevorzugt 20 bis 30 besitzen.

### Kettenverlängerungs- und/oder Vernetzungsmittel (b)

Die Polyurethane können ohne oder unter Mitverwendung von Kettenverlängerungs- und/oder Vernetzungsmitteln hergestellt werden. Zur Modifizierung der mechanischen Eigenschaften, beispielsweise der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- oder Vernetzungsmittel stellen, sofern sie mindestens zwei reaktive Wasserstoffatome besitzen, eine Untergruppe der Verbindungen mit mindestens zwei reaktiven Wasserstoffen (Komponente (a)) dar.

Als Kettenverlängerungs- und/oder Vernetzungsmittel werden Diole und/oder Triole mit Molekulargewichten <400, vorzugsweise 60 bis <300 eingesetzt.

In Betracht kommen beispielsweise aliphatische, cycloaliphatische und/oder araliphatische Diole mit 2 bis 14, vorzugsweise 2 bis 10 Kohlenstoffatomen, beispielsweise Ethylenglycol, Propandiol-1,3, Decandiol-1,10, o-, m-, p-Dihydroxycyclohexan, Diethylenglycol, Dipropylenglycol und vorzugsweise Butandiol-1,4, Hexandiol-1,6 und Bis-(2-hydroxyethyl)-hydrochinon, Triole, beispielsweise 1,2,3-Trihydroxycyclohexan, Glycerin und Trimethylolpropan und niedermolekulare hydroxygruppenhaltige Polyalkylenoxide auf Basis von Ethylen- und/oder 1,2-Propylenoxid und den vorgenannten Diolen und/oder Triolen als Startermoleküle.

Zur Herstellung von zelligen Elastomerformkörpern und Integralschaumstoffen können außer den oben genannten Diolen und/oder Triolen oder im Gemisch mit diesen als Kettenverlängerungs und/oder Vernetzungsmittel (b) auch sekundäre aromatische Diamine, 3,3'-Di- und/oder 3,3'-, 5,5'-tetraalkylsubstituierte Diaminodiphenylmethane Anwendung finden.

Als sekundäre aromatische Diamine seien vorzugsweise genannt: N,N'dialkylsubstituierte aromatische Diamine mit 1 bis 20, vorzugsweise 1 bis 4 Kohlenstoffatomen im N-Alkylrest, wie N,N'-Di-sek.-phenyl-, N,N'-Di-sek.-hexyl-, N,N'-Di-sek.-decyl-, N,N'-Dicyclohexyl-p- bzw. -m-phenylendiamin, N,N'-Dimethyl-, N,N'-Diethyl-, N,N'-Diisopropyl-, N,N'-Di-sek.-butyl-, N,N'-Dicyclohexyl-4,4'-diaminophenylmethan und N,N'-Di-sek.-butyl-benzidin. Diese können ggf. am aromatischen Kern durch Alkylreste substituiert sein.

### Katalysatoren (c)

Als Katalysator (c) zur Herstellung von Polyurethanen werden insbesondere Verbindungen verwendet, die die Reaktion der reaktiven Wasserstoffatome, insbesondere Hydroxygruppen enthaltenden Verbindungen der Komponenten (a) und gegebenenfalls (b) mit den organischen, gegebenenfalls modifizierten Polyisocyanaten (h) stark beschleunigen. In Betracht kommen organische Metallverbindungen, vorzugsweise organische Zinnverbindungen, beispielsweise Zinn-(II)-acetat, Zinn-(II)-octoat, Zinn-(II)-ethylhexoat und Zinn-(II)-laurat, Dibutylzinndilaurat, Dibutylzinnmaleat und Dioctylzinndiacetat und Dioctyldizinndimercaptid. Die organischen Metallverbindungen werden alleine oder vorzugsweise in Kombination mit stark basischen Aminen eingesetzt.

Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)harnstoff. Dimethylpiperazin, 1,2-Dimethylimidazol, 1-Azabicyclo-(3,3,0)-octan und vorzugsweise 1,4-Diazabicyclo-(2,2,2)-octan, und Alkanolverbindungen, wie Triethanolamin, Triisopropanolamin, N-Methyl- und N-Ethyldiethanolamin und Dimethylethanolamin.

Als Katalysatoren sind weiterhin bevorzugt: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise werden 0,001 bis 5 Gew.-%, insbesondere 0,05 bis 2 Gew.-%, Katalysator bzw. Katalysatorkombinationen, bezogen auf das Gewicht der Komponente (a), verwendet.

### Treibmittel (d)

Zur Herstellung von Polyurethan-Schaumstoffen wird als chemisches Treibmittel (d) Wasser verwendet, das mit Isocyanatgruppen unter Bildung von Kohlendioxid, dem wirklichen Treibgas, reagiert. Die Wassermengen, die zweckmäßigerweise eingesetzt werden, betragen 0,1 bis 5 Gew.-Teile, vorzugsweise 1,5 bis 3,5 Gew.-Teile und besonders bevorzugt 2,0 bis 3,0 Gew.-Teile, bezogen auf 100 Gew.-Teile der organischen Verbindung mit mindestens zwei reaktiven Wasserstoffen, vorzugsweise Polyhydroxyverbindung (a) bzw. Mischungen aus organischer Verbindung mit mindestens zwei reaktiven Wasserstoffen, vorzugsweise höhermolekularen Polyhydroxylverbindungen (a) mit Kettenverlängerungs- und/oder Vernetzungsmitteln (b).

An Stelle von oder im Gemisch mit Wasser können als Treibmittel (d) auch physikalisch wirkende Treibmittel eingesetzt werden. Geeignet sind insbesondere Flüssigkeiten, welche gegenüber den Polyisocyanaten (h) inert sind und Siedepunkte unter 100°C, vorzugsweise unter 50°C und besonders bevorzugt zwischen -50 und 30°C bei Atmosphärendruck aufweisen, so daß sie unter dem Einfluß der exothermen Polyadditionsreaktion verdampfen. Beispiele derartiger Flüssigkeiten sind Kohlenwasserstoffe, beispielsweise iso-Pentan, vorzugsweise technische Gemische aus n- und iso-Pentan, n- und iso-Butan, n- und iso-Propan, Cycloalkane, wie beispielsweise Cyclohexan und Cyclopentan, Ether, beispielsweise Furan, Dimethylether und Dieethylether, Ketone, beispielsweise Aceton und Methylethylketon, Carbonsäurealkylester, beispielsweise Methylformiat, Dimethyloxalat und Ethylacetat und halogenierte Kohlenwasserstoffe, beispielsweise Methylenchlorid, Dichlormonofluormethan, Difluormethan, Difluorchlormethan, Trifluormethan, Difluorethan, Tetrafluorethan, Heptafluorpropan, 1-Chlor-2,2-difluorethan, 1-Chlor-1,1-difluorethan und 1-Chlor-1,2-difluorethan. Auch Gemische dieser niedrigsiedenden Flüssigkeiten, beispielsweise aus Difluormethan und 1-Chlor-1,1-difluorethan und/oder mit anderen halogensubstituierten oder unsubstituierten Kohlenwasserstoffen können verwendet werden. Ein erfindungsgemäß ferner bevorzugtes Treibmittel ist CO₂ für sich oder im Gemisch mit anderen Treibmitteln, vorzugsweise Wasser.

Die Menge an physikalisch wirkenden Treibmitteln kann in Abhängigkeit von der gewünschten Schaumstoffdichte auf einfache Weise ermittelt werden und beträgt 0 bis 25 Gew.-Teile, vorzugsweise 1 bis 25 Gew.-Teile und besonders bevorzugt 2 bis 15 Gew.-Teile pro 100 Gew.-Teile der Polyhydroxylverbindungen (a). Gegebenenfalls kann es zweckmäßig sein, die gegebenenfalls modifizierten Polyisocyanate (h) mit dem inerten physikalisch wirkenden Treibmittel zu mischen und dadurch die Viskosität zu verringern.

### Flammschutzmittel (e)

Geeignete Flammschutzmittel (e) sind beispielsweise Trikresylphosphat, Tris-(2-chlorethyl)phosphat, Tris-(2-chlorpropyl)phosphat, Tetrakis-(2-chlorethyl)ethylendiphosphat, Dimethylmethanphosphonat, Diethanolaminomethylphosphonsäurediethylester sowie handelsübliche halogenierte Flammschutzpolyole.

Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, beispielsweise Melamin, oder Mischungen aus mindestens zwei Flammschutzmitteln, beispielsweise Ammoniumpolyphosphaten und Melamin, sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponenten zu verwenden.

Nähere Angaben über die oben genannten anderen üblichen Hilfs- und Zusatzstoffe sind in der Fachliteratur, beispielsweise in der Monographie von J.H. Saunders und K.C. Frisch *"High Polymers*", Bd. XVI, *Polyurethanes,* Teil 1 u. Teil 2, Verlag Interscience Publishers, 1962 bzw. 1964, oder dem *Kunststoff-Handbuch*, *Polyurethane*, Bd.VII, Hanser-Verlag, München/Wien, 1. u. 2. Aufl., 1966 und 1983, zu entnehmen.

Zur Herstellung der erfindungsgemäßen Polyurethane werden die organischen Polyisocyanate (h), die organischen Verbindungen mit mindestens zwei reaktiven Wasserstoffatomen (a) und gegebenenfalls Kettenverlängerungs- und/oder Vernetzungsmittel (b) in solchen Mengen zur Umsetzung gebracht, daß das Äquivalenzverhältnis der NCO-Gruppen der Polyisocyanate (h) zu der Summe der reaktiven Wasserstoffatome der Komponente (a) und gegebenenfalls (b) sowie bei der Verwendung von Wasser als Treibmittel auch des Wassers 0,85 bis 1,25:1, vorzugsweise 0,95 bis 1,15:1 und insbesondere 1,05:1 beträgt. Falls die Polyurethane zumindest teilweise Isocyannatgruppen gebunden enthalten, wird üblicherweise ein Verhältnis von NCO-Gruppen der Polyisocyanate (h) zur Summe der reaktiven Wasserstoffatome der Komponente (a) und gegebenenfalls (b) von 1,5 bis 20:1, vorzugsweise 1,5 bis 8:1, angewandt.

### Verstärkermittel (f)

Die erfindungsgemäßen Polyurethansynthesezusammensetzungen, die daraus gewonnenen Polyurethane sowie die jeweils aus beiden oder deren Mischungen gewonnenen Formkörper, Fasern, Folien, Beschichtungen, Lacke und Schäume können beispielsweise mit einer Deckschicht, vorzugsweise aus Lack oder einem Dekomaterial versehen werden und/oder Einleger als Befestigungselemente und/oder insbesondere Verstärkungsmittel aufweisen.

Als Dekomaterialien kommen vorzugsweise gegebenenfalls bedrucktes oder buntes Papier, Pappe, Karton, Folien aus TPU, PVC, PVC-haltige Polymergemische, beispielsweise aus PVC/ABS, PVC/PU, PVC/ABS/Polyvinylacetat, Vinylchlorid/Methacrylat/Butadien/Styrolpolymerisat oder Ethylen/Vinylacetat/Vinylchlorid-polymerisat und Textilien sowie Teppiche in Betracht.

Bewährt haben sich beispielsweise Einleger aus metallischen Werkstoffen, vorzugsweise Aluminium, Kupfer, Titan, Messing oder Stahlblech oder Kunststoffen, beispielsweise TPU, Polyamid, Polycarbonat, beispielsweise Polybutylenterephthalat und Polyolefin-Homo- oder Copolymeren sowie aus Gemische und Blends derartiger Kunststoffe. Als Verstärkungsmittel in Betracht kommen vorzugsweise Fasern und aus Fasern hergestellte Gelege, Gewebe, Matten, Filze oder Vliese. Geeignete Fasern sind beispielsweise Naturfasern, insbesondere Cellulose-, Baumwolle-, Sisal-, Jute-, Hanf-, Schilf- oder Flachsfasern, Kunststoffasern, vorzugsweise Polyester-, Polyurethan-, Polyamid-, Polyaramid- oder Polyacrylnitrilfasern, vorzugsweise Kohlefasern und insbesondere Glasfasern, wobei die Fasern mit Haftvermittlern und/oder Schlichten ausgerüstet sein können.

Geeignete Glasfasern, die vorzugsweise in Form von Glasgeweben, -matten, -vliesen und/oder Glasseidenrovings oder geschnittener Glasseide aus alkaliarmen E-Gläsern mit einem Durchmesser von 5 bis 200 µm, vorzugsweise 6 bis 15 *µ*m eingesetzt werden können, weisen vorzugsweise nach ihrer Einarbeitung in die PU-Formmassen im allgemeinen eine mittlere Faserlänge von 0,05 bis 1 mm, vorzugsweise 0,1 bis 0,5 mm auf.

Zur Herstellung von Formteilen, vorzugsweise im Dichtebereich von 0,15 bis 1,4 g/cm³, finden insbesondere Kombinationen aus einem PU-System und Glasmatten, -geweben und/oder -gelegen Verwendung. Für Formkörper bis zu einer Gesamtdichte von ungefähr 0,6 g/cm³ eignen sich insbesondere voluminöse Endlosglasmatten, beispielsweise mit Glasgewichten von 225 bis 650 g/m², die beim Aufschäumen des PU-Systems sehr gut durchlässig sind, so daß eine vollständige Tränkung der Glasmatten erzielt werden kann. Die aus den erfindungsgemäßen Polyurethansynthesezusammensetzungen beziehungsweise den daraus gewonnenen Polyurethanen oder deren Mischungen hergestellten Formkörper können Verstärkungsmittelgehalte, insbesondere Glasgehalte, von bis zu 75 Gew.-% besitzen, insbesondere bei zusätzlichem oder alleinigem Einsatz von Glasgeweben und/oder Glasgelegen.

### Hilfsmittel (g)

Der Reaktionsmischung zur Herstellung der Formkörper mit verdichteter Randzone und zelligem Kern können gegebenenfalls Hilfsmittel und/oder Zusatzstoffe (g) einverleibt werden. Genannt seien beispielsweise oberflächenaktive Substanzen, Schaumbildungsstabilisatoren, Zellregler, Füllstoffe, Farbstoffe, Pigmente, gegebenenfalls Flammschutzmittel, Hydrolyseschutzmittel, fungistatisch und bakteriostatisch wirkende Substanzen. Als oberflächenaktive Substanzen kommen beispielsweise Verbindungen in Betracht, welche zur Unterstützung der Homogenisierung der Ausgangsstoffe dienen und gegebenenfalls auch geeignet sind, die Zellstruktur der Grundstoffe zu regulieren.

Als bevorzugte oberflächenaktive Substanzen seien beispielsweise Emulgatoren, wie die des Natriumsalzes der Ricinusölsulfate oder von Fettsäuren, sowie Salzen von Fettsäuren mit Aminen, beispielsweise ölsaures Diethylamin, stearinsaures Diethanolamin, ricinolsaures Diethanolamin, Salze von Sulfonsäuren, beispielsweise Alkali- oder Ammoniumsalze von Dodecylbenzol- oder Dinaphthylmethandisulfonsäure oder Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. ricinolsaure Ester, Türkischrotöl, Erdnußöl und Zellregler, wie Paraffine, Fettalkohole, Dimethylpolysiloxane genannt. Zur Verbesserung der Emulgierwirkung, der Zellstruktur und/oder Stabilisierung des Schaumes eignen sich ferner oligomere Acrylate mit Polyoxalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b) bis (f) angewandt.

Als geeignete Trennmittel seien vorzugsweise genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, beispielsweise Carbonsäureester und/oder -amide, gemäß EP-A-153 639 oder DE-A-36 07 447.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen.

Im einzelnen seien bevorzugte beispielhaft genannt:

Anorganische Füllstoffe wie silicalitische Mineralien, beispielsweise Schichtsilicate, wie Antigorit, Serpentit, Hornblende, Amphibole, Chrysolit, Talkum; Metalloxide, wie Kaolin, Aluminiumoxide, Titanoxide und Eisenoxide, Metallsalze, wie Kreide, Schwerspat und anorganische Pigmente, wie Cadmiumsulfid, Zinksulfid, sowie Glas u.a. Vorzugsweise verwendet werden Kaolin (China Clay), Aluminiumsilicat und Copräzipitate aus Bariumsulfat und Aluminiumsilicat sowie natürliche und synthetische faserförmige Mineralien, beispielsweise Wollastonit, Metall- und insbesondere Glasfasern verschiedener Länge, die gegebenenfalls geschlichtet sein können. Organische Füllstoffe, wie z.B. Kohle, Melamin, Kolophonium, Cyclopentadienylharze und Pfropfpolymerisate sowie Cellulosefasern, Polyamid-, Polyacrylnitril-, Polyurethan-, Polyesterfasern und organische Füllstoffe auf der Grundlage von aromatischen und/oder aliphatischen Dicarbonsäureestern und insbesondere Kohlenstoffasern.

Die anorganischen oder organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (beispielsweise (b) bis (f)), einverleibt.

### Polyisocyanate (h)

Als organische Polyisocyanate kommen vorzugsweise die an sich bekannten aliphatischen, cycloaliphatischen und besonders bevorzugt aromatischen mehrwertigen Isocyanate in Frage. Besonders bevorzugt sind in einer erfindungsgemäßen Ausführungsform Polyisocyanate mit zwei Isocyanatgruppen, wenn derartige Polyisocyanate nicht vernetzend wirken sollen. Ist jedoch die vernetzende Wirkung der Polyisocyanate bevorzugt, werden dann in einer erfindungsgemäßen Ausführungsform Polyisocyanate mit mehr als zwei Isocyanatgruppen verwandt.

Besonders bevorzugte organische Polyisocyanate (a) sind beispielsweise Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4' -Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4' - und 2,2' -Diphenylmethandiisocyanat und die entsprechenden Isomerengemische, Mischungen aus 4,4' - und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten, beispielsweise Roh-MDI und Mischungen aus Roh-MDI und Toluylendiisocyanaten. Die organischen Di- und Polyisocyanate können einzeln oder in Form ihrer Mischungen eingesetzt werden.

Häufig werden als organische Polyisocyanate (h) auch sogenannte modifizierte mehrwertige Isocyanate, d.h. Produkte, die durch chemische Umsetzung organischer Di- und/oder Polyisocyanate erhalten werden, verwendet. Beispielhafte Isocyanate dieser Art sind Ester-, Harnstoff-, Biuret-, Carbodiimid-, Isocyanurat-, und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit einem NCO-Gehalt von 33,6 bis 15 Gew.-%, vorzugsweise von 31 bis 21 Gew.-%, bezogen auf das Gesamtgewicht; beispielsweise mit niedermolekularen Diolen, Triolen, Dialkylenglycolen, Trialkylenglycolen oder Polyoxyalkylenglycolen mit Molekulargewichten bis 6.000, insbesondere mit Molekulargewichten bis 1.500, modifiziertes 4,4'-Diphenylmethandiisocyanat, modifizierte 4,4'- und 2,4'-Diphenylmethandiisocyanat-Mischungen oder modifiziertes Roh-MDI, wobei Di- bzw. Polyoxyalkylenglycole einzeln oder als Gemische eingesetzt werden können. Beispielhaft genannt seien: Diethylen-, Dipropylenglycol, Polyoxyethylen-, Polyoxypropylen- und Polyoxypropylenpolyethylendiole, -triole und/oder -tetrole. Erfindungsgemäß vorzugsweise geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht des Prepolymers, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Weiterhin bevorzugt sind flüssige, Carbodiimidgruppen und/oder Isocyanuratringe enthaltende Polyisocyanate mit einem NCO-Gehalt von 33,6 bis 15 Gew.-%, vorzugsweise 31 bis 21 Gew.-%, bezogen auf das Gesamtgewicht des Polyurethans, beispielsweise auf Basis von 4,4'-, 2,4'- und/oder 2,2'-Diphenylmethandiisocyanat und/oder 2,4- und/oder 2,6-Toluylendiisocyanat.

Die modifizierten Polyisocyanate können vorzugsweise miteinander oder mit unmodifizierten organischen Polyisocyanaten, beispielsweise 2,4'-, 4,4'-Diphenylmethandiisocyanat, Roh-MDI, 2,4- und/oder 2,6-Toluylendiisocyanat gemischt werden.

Besonders bevorzugt sind die folgenden organischen Polyisocyanate, die sich besonders bei der Herstellung von zelligen Elastomeren bewährt haben:

NCO-Gruppen enthaltende Prepolymere mit einem NCO-Gehalt von 25 bis 9 Gew.-% bezogen auf das Prepolymer, insbesondere auf Basis von Polyether- oder Polyesterpolyolen und einem oder mehreren Diphenylmethandiisocyanatisomeren, vorteilhafterweise 4,4'-Diphenylmethandiisocyanat und/oder modifizierte Urethangruppen enthaltende organische Polyisocyanate mit einem NCO-Gehalt von 33,6 bis 15 Gew.-%, insbesondere auf Basis von 4,4'-Diphenylmethandiisocyanat oder Diphenylmethandiisocyanatisomeren-Gemischen.

Zur Herstellung von flexiblen Polyurethanschaumstoffen als Untergruppe der zelligen Elastomere haben sich bewährt:

Mischungen aus 2,4- und 2,6-Toluylendiisocyanaten, Mischungen aus Toluylendiisocyanaten und Polyphenylpolymethylenpolyisocyanat oder insbesondere Mischungen aus den vorgenannten Prepolymeren auf Basis von Diphenylmethandiisocyanatisomeren und Roh-MDI, vorzugsweise Polyphenylpolymethylenpolyisocyanat, mit einem Diphenylmethandiisocyanat-Isomerengehalt von 30 bis 80 Gew.-%.

Die Erfindung soll nun anhand der nachstehenden, nicht limitierenden Beispiele erläutert werden.

### Beispiele

### Herstellung des Emulgators

1.125 g (0,125 mol) eines Polyethylenoxids des Molekulargewichts Mₙ 9.000 g/mol (Pluriol® 9.000) und 23,4 g (0,125 mol) Methoxyethoxypropylamin wurden in einem 3 Liter Rührkolben vorgelegt und bei 100°C 30 Minuten lang gerührt. Dazu wurden 70 g (0,25 mol Anhydridgruppen) eines Maleinsäureanhydrid/C₁₂/C₁₂₋₁₄-Copolymeren (Molverhältnis C₁₂/C₁₂₋₁₄ 1:1, M_{w} ca. 6.000 g/mol) gegeben und 240 Minuten lang bei 140°C unter Abdestellieren des gebildeten Reaktionswassers gerührt. Das Produkt wurde zum Erstarren in eine Stahlwanne gegossen.

### Beispiel 1 (Vergleich)

Eine Mischung aus 79,8 Gewichtsteilen eines TMP (Trimethyolpropan)-gestarteten PO-EO Polyetherols mit einem Ethylenoxidanteil von 21 Gew.-%, bezogen auf das Polyetherol, mit OH-Zahl 26,5, 20 Gewichtsteilen Ethylenglycol und 0,2 Gewichtsteilen Wasser wurde mit einer schnellaufenden Mischeinrichtung 5 Minuten homogenisiert. Nach 36 Stunden war die entstandene Mischung zweiphasig separiert.

### Beispiel 2 (erfindungsgemäß)

Zu einer Mischung, bestehend aus 79,8 Gewichtsteilen eines TMP-gestarteten PO-EO Polyetherols mit einem Ethylenoxidanteil von 21 Gew.-%, bezogen auf das Polyetherol, mit OH-Zahl 26,5 und 20 Gewichtsteilen Ethylenglycol gab man 0,4 Gewichtsteile einer 50%-igen wässrigen Lösung des eingangs beschriebenen Emulgators. Die Mischung wurde 5 Minuten mit einer schnellaufenden Mischeinrichtung homogenisiert. Die Mischung war auch nach 3 Monaten Lagerung nicht separiert.

### Beispiel 3 (Vergleich)

Eine Mischung aus 74,6 Gewichtsteilen eines TMP-gestarteten PO-EO Polyetherpolyols mit einem Ethylenoxidanteil von 21 Gew.-%, bezogen auf den Polyetherol, mit OH-Zahl 26,5, 19,0 Gewichtsteilen Ethylenglycol, 0,05 Gewichtsteilen einer 25%-igen Lösung von Triethylendiamin in Ethylenglycol, 0,15 Gewichtsteilen UL 32 (Dioctylzinndimercaptid der Firma Witco), 6,0 Gewichtsteilen Schwarzpaste N (Schwarzpaste N = Ruß/Polyolaufschlämmung der Firma Bayer), und 0,2 Gewichtsteilen Wasser, wurde mit einer schnell laufenden Mischeinrichtung homogenisiert. Nach 36 Stunden war die entstandene Mischung zweiphasig separiert.

### Beispiel 4 (erfindungsgemäß)

Zu einer Mischung, bestehend aus 74,6 Gewichtsteilen eines TMP-gestarteten PO-EO Polyetherpolyols mit einem Ethylenoxidanteil von 21 Gew.-%, bezogen auf das Polyetherol mit OH-Zahl 26,5, 19,0 Gewichtsteilen Ethylenglycol, 0,05 Gewichtsteilen einer 25%igen Lösung von Triethylendiamin in Ethylenglycol, 0,15 Gewichtsteilen UL 32 und 6 Gewichtsteilen Schwarzpaste N wurden 0,4 Gewichtsteile einer 50%-igen wässrigen Lösung des erfindungsgemäßen Emulgators gegeben. Die Mischung wurde, wie in Beispiel 3, 5 min mit einer schnell laufenden Mischeinrichtung homogenisiert. Die Mischung war auch nach 3 Monaten noch nicht separiert.

### Herstellung von Formkörpern

Aus den in Beispiel 3 und 4 beschriebenen Mischungen wurden mittels der Reaktionsspritzgußtechnik (RIM-Technik) in einem auf 50°C temperierten Aluminiumwerkzeug Prüfplatten mit den Maßen 300 x 250 x 4 mm hergestellt.

Die Mischungen aus Beispiel 1 und 2 wurden mit einer weiteren 1:1 Mischung aus Lupranat MP102 und Lupranat MP105 (Lupranat MP102 und Lupranat MP105 sind modifizierte Isocyanat-Komponenten der Elastogran GmbH Lemförde) umgesetzt. Der NCO-Gehalt der Mischung betrug 25,5%. Das Äquivalenz-Verhältnis NCO-Gruppen in der Isocyanat-Mischung zur Summe der reaktiven Wasserstoffatome in der Polyolkomponente betrug 1,05:1.

Für die Prüfplatten wurden die in folgender Tabelle 1 aufgeführten mechanischen Eigenschaften gemäß den in den Spalten der Tabelle angegebenen DIN-Verfahren bestimmt.

| **Mischung aus Beispiel** | **Dichte** | **Shore Härte D** | **Zugfestigkeit** | **Dehnung** | **Biege-E Modul** |
|---|---|---|---|---|---|
| | DIN 53 420 | DIN 53 505 | DIN 53 504 | DIN 53 504 | DIN 53 457 |
| | (g/l) | | N/mm² | % | N/mm² |
| 3 (Vergleich) | 1010 | 62 | 23 | 220 | 630 |
| 4 (erfindungsgemäß) | 1015 | 62 | 24 | 217 | 635 |

Durch den Emulgatorzusatz wurden die Materialeigenschaften nicht verändert.

## Patentansprüche

1. Polyurethansynthesezusammensetzung, enthaltend ein Polymer (T) als Emulgator, bestehend aus
(i) einem Copolymerrückgrat (TR), gebildet aus
TR1) mindestens einer ethylenisch ungesättigten C₄- bis C₁₂-Dicarbonsäure, deren Anhydrid oder deren Mischungen,
TR2) mindestens einem C₂- bis C₄₀-Olefin, und
(ii) einem von dem Copolymerrückgrat ausgehenden Polyalkylenoxid (TP), gebildet aus
TP1) mindestens einem C₂- bis C₂₀-Oxiran,
sowie als weitere Komponenten eine erste und eine zweite Verbindung mit mindestens zwei reaktiven Wasserstoffatomen (a), wobei die erste Verbindung in der zweiten Verbindung unlöslich ist, wobei die erste Verbindung ein Propylen- und Ethylenoxid aufweisendes Polyetherpolyol und die zweite Verbindung ein C₂-C₂₀-Alkylendiol ist, und die erste Verbindung in der zweiten Verbindung unlöslich ist, wenn eine 1 : 1-Mischung, beider Verbindungen innerhalb eines Monats nach Herstellung der Mischung einer Phasenseparation unterliegt, wenn die Mischung nicht bewegt wird.

2. Polyurethansynthesezusammensetzung nach Anspruch 1, wobei TR jeweils unabhängig von einander zu mindestens 10 Gew.-% aus TR1 und TR2 besteht und ein Molekulargewicht M_{w} von 300 bis 20.000 g/Mol besitzt.

3. Polyurethansynthesezusammensetzung nach Anspruch 1 oder 2, wobei TP aus mindestens 10 Gew.-% TP1, bezogen auf das Polymer T, besteht und ein Molekulargewicht Mₙ von 300 bis 50.000 g/Mol besitzt.

4. Polyurethansynthesezusammensetzung nach einem der vorherigen Ansprüche, wobei von 10 bis 100 Mol-% der Anhydridgruppen oder Carboxylgruppen des TR umgesetzt sind.

5. Polyurethansynthesezusammensetzung nach Anspruch 4, wobei, wenn weniger als 100 Mol-% von den Anhydridgruppen oder Carboxylgruppen des TR mit TP umgesetzt sind, von diesen
- Alkoxyreste von C₁- bis C₃₀-Alkanolen
oder
- Aminoreste von C₁- bis C₃₀-Aminen
oder deren Mischungen ausgehen.

6. Polyurethansynthesezusammensetzung nach einem der vorherigen Ansprüche, enthaltend eine oder mehrere der Komponenten (b) bis (g):
(b) Kettenverlängerungs- und Vernetzungsmittel
(c) Katalysator
(d) Treibmittel
(e) Flammschutzmittel
(f) Verstärkermittel
(g) Hilfsmittel.

7. Polyurethansynthesezusammensetzung nach einem der vorherigen Ansprüche, wobei diese als Einphasensystem vorliegt.

8. Verfahren zur Herstellung einer Polyurethansynthesezusammensetzung nach einem der Ansprüche 1 bis 7, wobei die Komponenten in Gegenwart des Polymers (T) in Kontakt gebracht werden.

9. Polyurethansynthesezusammensetzung, erhältlich nach Anspruch 8.

10. Polyurethan, erhältlich durch Inkontaktbringen von einer Polyurethansynthesezusammensetzung nach einem der Ansprüche 1 bis 7 und 9 mit einem organischen Polyisocyanat (h).

11. Verwendung der Polyurethansynthesezusammensetzung nach einem der Ansprüche 1 bis 7 und 9 oder des Polyurethans nach Anspruch 10 oder einer Mischung aus zwei oder mehr davon für Formkörper, Fasern, Folien, Beschichtungen, Lacke und Schäume.

12. Formkörper, Fasern, Folien, Beschichtungen, Lacke und Schäume, beinhaltend eine Polyurethansynthesezusammensetzung nach einem der Ansprüche 1 bis 7 und 10 oder ein Polyurethan nach Anspruch 10 oder eine Mischung aus zwei oder mehr davon.

## Claims

1. A composition for the synthesis of polyurethanes, which comprises, as emulsifier, a polymer (T) comprising
(i) a copolymer backbone (TR) formed from
TR1) at least one ethylenically unsaturated C₄-C₁₂-dicarboxylic acid, an anhydride thereof or a mixture thereof,
TR2) at least one C₂-C₄₀-olefin, and
(ii) a polyalkylene oxide (TP) which extends from the copolymer backbone and is formed from
TP1) at least one C₂-C₂₀-oxirane,
and, as further components, a first compound and a second compound having at least two reactive hydrogen atoms (a), wherein the first compound is insoluble in the second compound and the first compound is a polyether polyol comprising propylene oxide and ethylene oxide and the second compound is a C₂-C₂₀-alkylenediol, with the first compound being considered to be insoluble in the second compound if a 1:1 mixture of the two compounds undergoes phase separation within one month after preparation of the mixture if the mixture is not agitated.

2. The composition for the synthesis of polyurethanes according to claim 1, wherein TR comprises at least 10% by weight of TR1 and independently at least 10% by weight of TR2 and has a molecular weight M_{w} of from 300 to 20 000 g/mol.

3. The composition for the synthesis of polyurethanes according to claim 1 or 2, wherein TP comprises at least 10% by weight of TP1, based on the polymer T, and has a molecular weight Mₙ of from 300 to 50 000 g/mol.

4. The composition for the synthesis of polyurethanes according to any of the preceding claims, wherein from 10 to 100 mol% of the anhydride groups or carboxyl groups of TR have been reacted.

5. The composition for the synthesis of polyurethanes according to claim 4, wherein, when less than 100 mol% of the anhydride groups or carboxyl groups of TR have been reacted with TP,
- alkoxy radicals of C₁-C₃₀-alkanols
or
- amino radicals of C₁-C₃₀-amines
or mixtures thereof extend from these.

6. The composition for the synthesis of polyurethanes according to any of the preceding claims, which comprises one or more of the components (b) to (g) :
(b) chain extenders and crosslinkers
(c) catalyst
(d) blowing agents
(e) flame retardants
(f) reinforcing materials
(g) auxiliaries.

7. The composition for the synthesis of polyurethanes according to any of the preceding claims which is present as a single-phase system.

8. A process for preparing a composition for the synthesis of polyurethanes according to any of claims 1 to 7, wherein the components are brought into contact in the presence of the polymer (T).

9. A composition for the synthesis of polyurethanes which is obtainable according to claim 8.

10. A polyurethane obtainable by bringing a composition for the synthesis of polyurethanes according to any of claims 1 to 7 and 9 into contact with an organic polyisocyanate (h).

11. The use of the composition for the synthesis of polyurethanes according to any of claims 1 to 7 and 9 or of the polyurethane according to claim 10 or of a mixture of two or more thereof for shaped bodies, fibers, films, coatings, paints and varnishes and foams.

12. A shaped body, fiber, film, coating, paint or varnish or foam comprising a composition for the synthesis of polyurethanes according to any of claims 1 to 7 and 10 or a polyurethane according to claim 10 or a mixture of two or more thereof.

## Revendications

1. Composition de synthèse de polyuréthanne, contenant un polymère (T) comme agent émulsionnant, constitué
(i) d'une épine dorsale copolymérique (TR), formée
TR1) d'au moins un acide dicarboxylique en C₄-C₁₂ éthyléniquement insaturé, de leur anhydride ou de leurs mélanges,
TR2) d'au moins une oléfine en C₂-C₄₀, et
(ii) d'un oxyde de polyalkylène (TP) partant de l'épine dorsale copolymérique et formé
TP1) d'au moins un oxiranne en C₂-C₂₀,
ainsi que, comme autres composants, un premier et un deuxième composé comportant au moins deux atomes d'hydrogène réactifs (a), le premier composé étant insoluble dans le deuxième composé, le premier composé étant un polyétherpolyol présentant de l'oxyde de propylène et de l'oxyde d'éthylène et le deuxième composé un alkylènediol en C₂-C₂₀, le premier composé étant insoluble dans le deuxième composé lorsqu'un mélange 1/1 des deux composés subit, en l'espace d'un mois après la préparation du mélange, une séparation de phases lorsque le mélange n'est pas déplacé.

2. Composition de synthèse de polyuréthanne suivant la revendication 1, dans laquelle TR est constitué, indépendamment l'un de l'autre, d'au moins 10% en poids de TR1 et de TR2 et possède un poids moléculaire M_{w} de 300 à 20.000 g/mole.

3. Composition de synthèse de polyuréthanne suivant l'une des revendications 1 et 2, dans laquelle TP est constitué d'au moins 10% en poids de TP1, par rapport au polymère T, et possède un poids moléculaire Mₙ de 300 à 50.000 g/mole.

4. Composition de synthèse de polyuréthanne suivant l'une des revendications précédentes, dans laquelle de 10 à 100% molaires des groupes anhydride ou des groupes carboxyle du TR sont mis à réagir.

5. Composition de synthèse de polyuréthanne suivant la revendication 4, dans laquelle, lorsque moins de 100% molaires des groupes anhydride ou des groupes carboxyle du TR sont mis à réagir avec TP, de ceux-ci partent
- des radicaux alcoxy d'alcanols en C₁-C₃₀, ou
- des radicaux amino d'amines en C₁-C₃₀, ou
leurs mélanges.

6. Composition de synthèse de polyuréthanne suivant l'une des revendications précédentes, contenant un ou plusieurs des composants (b) à (g) :
(b) agent d'allongement de chaîne et de réticulation,
(c) catalyseur,
(d) agent moussant,
(e) agent ignifuge,
(f) agent renforçateur,
(g) adjuvant.

7. Composition de synthèse de polyuréthanne suivant l'une des revendications précédentes, dans laquelle celle-ci se présente sous la forme d'un système à une phase.

8. Procédé de préparation d'une composition de synthèse de polyuréthanne suivant l'une des revendications 1 à 7, dans lequel les composants sont mis en contact en présence du polymère (T).

9. Composition de synthèse de polyuréthanne, que l'on peut obtenir suivant la revendication 8.

10. Polyuréthanne, que l'on peut obtenir par mise en contact d'une composition de synthèse de polyuréthanne suivant l'une des revendications 1 à 7 et 9, avec un polyisocyanate organique (h).

11. Utilisation de la composition de synthèse de polyuréthanne suivant l'une des revendications 1 à 7 et 9 ou du polyuréthanne suivant la revendication 10 ou d'un mélange de deux ou plusieurs d'entre eux, pour des corps façonnés, des fibres, des feuilles, des revêtements, des vernis et des mousses.

12. Corps façonnés, fibres, feuilles, revêtements, vernis et mousses, contenant une composition de synthèse de polyuréthanne suivant l'une des revendications 1 à 7 et 10 ou un polyuréthanne suivant la revendication 10 ou un mélange de deux ou plusieurs d'entre eux.
